# EUROPÄISCHE PATENTSCHRIFT

(11) **EP 1 559 894 B1**
(45) Veröffentlichungstag und Bekanntmachung des Hinweises auf die Patenterteilung: **09.04.2008**
(21) Anmeldenummer: 04026968.0
(22) Anmeldetag: 12.11.2004
(51) Int. Cl.: F02D 41/22, F01N 11/00

(54) **Verfahren zur Beurteilung der Güte eines einer Brennkraftmaschine eines Fahrzeuges, insbesondere eines Kraftfahrzeuges, nachgeschalteten Abgaskatalysator**
Method of judgement of the quality of the exhaust catalyst in the exhaust path of an internal combustion engine of a vehicle
Procédé pour l'évaluation de la qualité d'un catalysateur des gaz d'échappement en aval d'un moteur à combustion interne d'un véhicule

(30) Priorität: 27.01.2004 DE 102004004277
(43) Veröffentlichungstag der Anmeldung: 03.08.2005
(73) Patentinhaber: AUDI AG, 85045 Ingolstadt (DE)
(72) Erfinder: Odendall, Bodo, 86633 Neuburg (DE)
(74) Vertreter: Krah, Annette

(56) Entgegenhaltungen:
- EP-A- 0 626 507
- EP-A- 0 878 611
- DE-A1- 10 013 893
- DE-A1- 19 913 901
- US-A1- 2003 070 420
- US-B1- 6 202 406
- US-B1- 6 450 018

## Beschreibung

Die Erfindung betrifft ein Verfahren zur Beurteilung der Güte eines einer Brennkraftmaschine eines Fahrzeuges, insbesondere eines Kraftfahrzeuges, nachgeschalteten Abgaskatalysators nach dem Oberbegriff des Anspruchs 1.

Gemäß einem allgemein bekannten gattungsgemäßen Verfahren zur Beurteilung der Güte eines einer Brennkraftmaschine eines Fahrzeuges nachgeschalteten Abgaskatalysators wird der von der Brennkraftmaschine kommende Abgasstrom zur Konvertierung der darin enthaltenen Schadstoffkomponenten durch den Abgaskatalysator geleitet, wobei der Abgaskatalysator einen Sauerstoffspeicher aufweist, in den bei Sauerstoffüberschuss Sauerstoff einspeicherbar ist und aus dem bei Sauerstoffmangel Sauerstoff ausspeicherbar ist. Der Abgaskatalysator weist in Abhängigkeit vom Alterungsgrad eine bestimmte Light-Off-Temperatur als Katalysator-Anspringtemperatur auf, bei der ein bestimmter vorgegebener Anteil, in der Regel 50 %, der im Abgasstrom vorhandenen Schadstoffe vom Abgaskatalysator konvertiert wird.

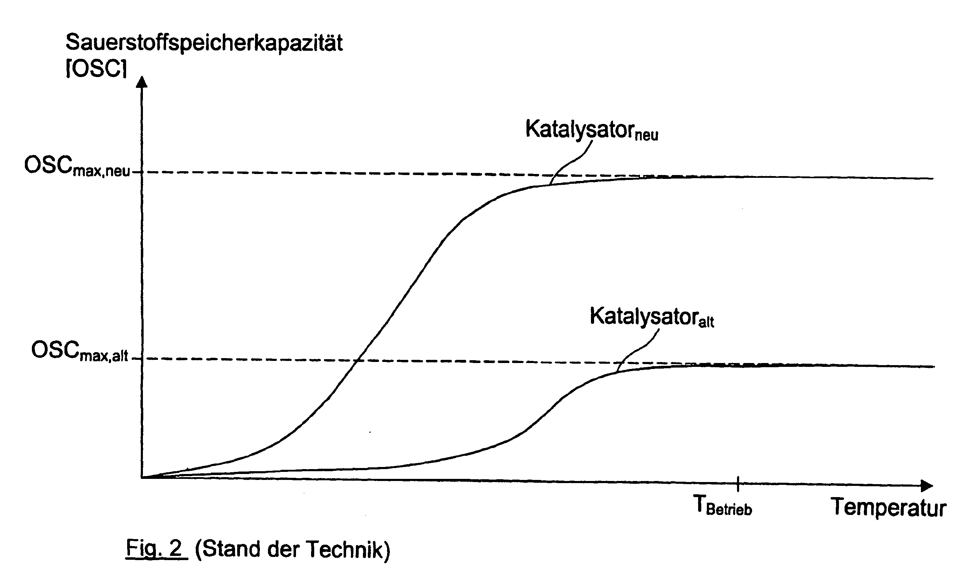

Konkret wird hierbei der Katalysator während der Warmlaufphase auf Temperaturen aufgeheizt, die höher sind als die Temperatur T_{Betrieb} in der Fig. 2. D. h., dass somit im betriebswarmen Zustand Temperaturen oberhalb der Temperatur T_{Betrieb} im Katalysator anliegen. Wie dies der Fig. 2 weiter entnommen werden kann, reduziert sich mit zunehmender Alterung des Katalysators die maximale Sauerstoffspeicherfähigkeit des Katalysators. Diese Verminderung der Sauerstoffspeicherfähigkeit eines betriebswarmen Katalysators wird im Rahmen der On-Board-Diagnose als Alterungskriterium für den Katalysator verwendet. Diese Aussage der Verminderung der Sauerstoffspeicherfähigkeit eines betriebswarmen Katalysators ist jedoch nur bedingt für eine Beurteilung der Alterung des Katalysators und damit eine Erhöhung der Emissionen aussagekräftig. Der Grund dafür liegt darin, dass die Katalysatoren bei heutigen Niedrig-Emissions-Konzepten eine betriebswarme Konvertierungsleistung von über 99 % besitzen. Dies bedeutet, dass ein Großteil der Emissionen in der Warmlaufphase bzw. Kaltstartphase entsteht. In der Zeit, die für die Aufheizung des Katalysators bis zur Light-Off-Temperatur benötigt wird, hat somit der Katalysator keine Konvertierungsleistung, d. h. die Schadstoffe werden in diesem Zeitraum nicht konvertiert. Mit zunehmender Alterung des Katalysators erhöht sich auch dessen Light-Off-Temperatur, was automatisch auch eine Verlängerung der Zeit bis zur Überschreitung dieser Light-Off-Temperatur bedeutet. Damit erhöhen sich auch die Schadstoffemissionen, die in dieser längeren Zeit bis zum Erreichen der durch die Katalysatoralterung bedingt angestiegenen Light-Off-Temperatur unkonvertiert durch den Katalysator strömen. Deshalb ist die genaue Kenntnis der alterungsbedingten Verschiebung der Light-Off-Temperatur von besonderem Interesse für die Beurteilung der Fahrzeugabgassicherheit. Ein Problem dabei ist jedoch, dass die Light-Off-Temperatur im Fahrzeug nicht direkt zu messen ist.

Aufgabe der Erfindung ist es daher, ein Verfahren zur Beurteilung der Güte eines einer Brennkraftmaschine eines Fahrzeuges, insbesondere eines Kraftfahrzeuges, nachgeschalteten Abgaskatalysators zu schaffen, mit der die Katalysatoralterungsbeurteilung auf einfache Weise im Rahmen einer On-Board-Diagnose möglich wird.

Diese Aufgabe wird gelöst mit den Merkmalen des Anspruchs 1.

Gemäß Anspruch 1 wird in Abhängigkeit von dem Erreichen eines vorgegebenen Sauerstoffspeicherkapazitätwertes des Sauerstoffspeichers eine aktuelle Katalysatortemperatur erfasst, die mit einem auf denselben Sauerstoffspeicherkapazitätswert bezogenen Katalysatortemperatur-Vergleichswert verglichen wird. Anschließend wird im Falle einer gegenüber dem Katalysatortemperatur-Vergleichswert festgestellten höheren aktuellen Katalysatortemperatur ein Temperaturanstieg ermittelt. Im Anschluss daran wird wiederum die Light-Off-Temperatur als zum Temperaturanstieg proportionale Größe ermittelt.

Erfindungsgemäß wird somit die messbare Verschiebung des Anstieges der Sauerstoffspeicherfähigkeit zu höheren Temperaturen hin als abgasrelevantes Gütekriterium für die Katalysatoralterungsbeurteilung genutzt. Dabei wird der Zusammenhang zwischen dem Anstieg der Sauerstoffspeicherkapazität über der Temperatur und der Light-Off-Temperatur des Abgaskatalysators ausgenutzt. Denn unter Verwendung dieses Zusammenhangs ist es möglich, mit der Information über die Sauerstoffspeicherkapazität als Funktion der Temperatur auf die Light-Off-Temperatur des Abgaskatalysators zu schließen, so dass eine On-Board-Diagnose bezüglich des Abgaskatalysators über den gesamten Betriebszeitraum, d. h. insbesondere auch während der Kaltstartphase durchgeführt werden kann.

Nach Anspruch 2 ist der Katalysatortemperatur-Vergleichswert in einem Kennfeld einer Motorsteuereinrichtung abgelegt. Dabei kann gemäß einer ersten alternativen Verfahrensführung der einem vorgegebenen Sauerstoffspeicherkapazitätswert zugeordnete Katalysatortemperatur-Vergleichswert auf einen neuen Katalysator bezogen sein. Alternativ dazu ist mit den Merkmalen des Anspruchs 4 aber auch vorgesehen, dass der einem vorgegebenen Sauerstoffspeicherkapazitätswert zugeordnete Katalysatortemperatur-Vergleichswert auf einen Alterungsgrad des Katalysators bezogen ist, der gegenüber dem Katalysator-Alterungsgrad neuwertiger ist, d. h., dass z. B. im Laufe der Diagnose der zuletzt ermittelte aktuelle Katalysatortemperaturwert als neuer Katalysatortemperatur-Vergleichswert definiert wird.

Besonders gute Diagnoseergebnisse lassen sich erzielen, wenn der Sauerstoffspeicherkapazitätswert bei 40 bis 60 %, vorzugsweise bei 50 % der aktuellen Sauerstoffspeicherfähigkeit des Abgaskatalysators festgelegt wird.

Gemäß Anspruch 6 ist vorgesehen, dass zur funktionssicheren On-Board-Diagnose unterschiedliche Katalysator-Alterungsgrade, denen eine bestimmte Light-Off-Temperatur zugeordnet ist, in einem Kennfeld der Motorsteuereinrichtung abgelegt sind.

Die unterschiedlichen Alterungsgraden des Abgaskatalysators zugeordneten Werte der maximalen Sauerstoffspeicherfähigkeit des Sauerstoffspeichers sind gemäß Anspruch 7 in einem Kennfeld der Motorsteuereinrichtung abgelegt.

Nach Anspruch 8 kann die Katalysatortemperatur jeweils aktuell mittels einer Messeinrichtung erfasst werden. Alternativ dazu ist jedoch auch die Ermittlung der Katalysatortemperatur anhand eines in der Motorsteuereinrichtung abgelegten Temperaturmodells ermittelbar. Dies kann z. B. über ein Wärmeeintragsmodell in den Katalysator hinein erfolgen.

Mit den Ansprüchen 9 bis 11 sind unterschiedliche Verfahrensführungen beansprucht, mit denen die aktuell in den Sauerstoffspeicher eingespeicherte Sauerstoffmenge ermittelbar ist. So ist gemäß einer ersten Verfahrensführung die aktuell eingespeicherte Sauerstoffmenge anhand der von einer dem Katalysator vorgeschalteten und einer dem Katalysator nachgeschalteten Sonde erfassten Sondensignale ermittelbar. Als Sonden werden vorzugsweise Lambdasonden verwendet.

Alternativ dazu kann die aktuell eingespeicherte Sauerstoffmenge aber auch anhand eines modellierten Vorkatsondensignals und eines gemessenen Sondensignals einer dem Katalysator nachgeschalteten Sonde ermittelt werden. Auch diese Sonde kann wiederum eine Lambdasonde sein.

Gemäß einer weiteren alternativen Verfahrensführung wird die aktuell eingespeicherte Sauerstoffmenge des Sauerstoffspeichers anhand eines Nachkatsondensignals ermittelt wird, das mittels einer dem Katalysator nachgeschalteten Lambdasonde erfasst wird, wobei während der Kaltstartphase eine Lambdaamplitude angelegt wird.

Mit derartigen Verfahrensführungen lässt sich auf einfache und funktionssichere Weise die Light-Off-Temperatur eines Katalysators für jeden aktuell gegebenen Katalysatoralterungszustand ermitteln, so dass dadurch eine geforderte und erwünschte dauerhafte On-Board-Diagnose auch während der Kaltstartphase durchführbar ist.

Die Erfindung wird nachfolgend anhand einer Zeichnung näher erläutert.

Es zeigen:
- Fig. 1: schematisch den Verlauf der Sauerstoffspeicherkapazität über der Temperatur für unterschiedliche Alterungszustände eines Abgaskatalysators in Abhängigkeit von einer Katalysatortemperatur, bei der 50 % der maximalen Speicherkapazität des Sauerstoffspeichers erreicht sind,

- Fig. 2: schematisch den Verlauf der Sauerstoffspeicherkapazität über der Temperatur für verschiedene Alterungszustände eines Abgaskatalysators gemäß dem Stand der Technik.

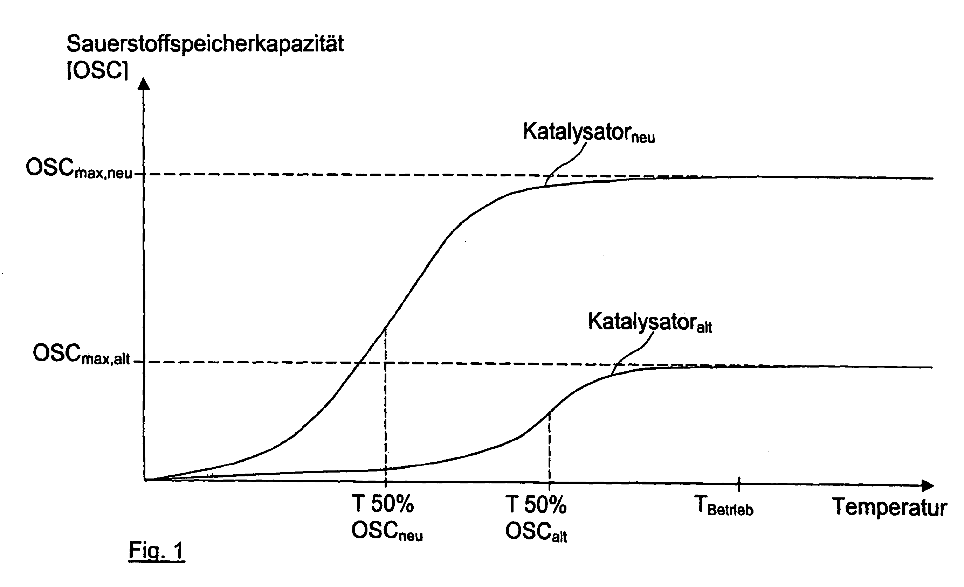

Figur 1 zeigt schematisch den Verlauf der Sauerstoffspeicherkapazität über der Temperatur für verschiedene Alterungszustände eines Abgaskatalysators. Dabei ist schematisch die Sauerstoffspeicherkapazität als Maß für den Alterungsgrad eines Sauerstoffspeichers eines Abgaskatalysators über der Katalysatortemperatur für verschiedene Katalysatoralterungszustände aufgetragen. Zwischen den beiden Grenzzuständen eines neuen Katalysators (Katalysator neu) und eines gealterten Katalysators (Katalysator alt) können Zwischenalterungszustände zeigende Kurven, liegen, die hier jedoch nicht eingezeichnet sind.

In der Fig. 1 ist mit T 50 % OSCₙₑᵤ diejenige Temperatur als Katalysatortemperatur-Vergleichswert angegeben, bei der 50 % der maximal in einen Sauerstoffspeicher eines neuen Abgaskatalysators einspeicherbaren Sauerstoffmenge in den Sauerstoffspeicher eingespeichert sind. Wird nun zu einem späteren Zeitpunkt, bei gealtertem Katalysator, die aktuelle Katalysatortemperatur T 50 % OSCₐₗₜ erfasst, dann kann, wie dies aus der Fig. 1 deutlich ersichtlich ist ein Temperaturanstieg der aktuellen Katalysatortemperatur gegenüber dem Katalysatortemperatur-Vergleichswert festgestellt werden. Dieser auf jeweils denselben prozentualen Wert der maximalen Sauerstoffspeicherkapazität bezogene Temperaturanstieg im Vergleich unterschiedlicher Katalysatoralterungszustände ermöglicht die Ermittlung der Light-Off-Temperatur als zu eben diesem Temperaturanstieg proportionale Größe. Damit kann die messbare Verschiebung des Anstiegs der Sauerstoffspeicherfähigkeit zu höheren Temperaturen hier somit erfindungsgemäß als abgasrelevantes Gütekriterium für die Katalysatoralterungsbeurteilung herangezogen werden.

Mit der erfindungsgemäßen Verfahrensführung ist es somit möglich, ohne direkte Messung der Light-Off-Temperatur diese im Rahmen der On-Board-Diagnose für die Katalysatorüberwachung auf einfache und funktionssichere Weise zu ermitteln.

## Patentansprüche

1. Verfahren zur Beurteilung der Güte eines einer Brennkraftmaschine eines Fahrzeuges nachgeschalteten Abgaskatalysators, bei dem der von der Brennkraftmaschine kommende Abgasstrom zur Konvertierung der darin enthaltenen Schadstoffkomponenten durch den Abgaskatalysator geleitet wird, wobei der Abgaskatalysator einen Sauerstoffspeicher aufweist, in den bei Sauerstoffüberschuss Sauerstoff einspeicherbar ist und aus dem bei Sauerstoffmangel Sauerstoff ausspeicherbar ist, und wobei der Abgaskatalysator in Abhängigkeit vom Alterungsgrad eine bestimmte Light-Off-Temperatur als Katalysator-Anspringtemperatur aufweist, bei der ein bestimmter vorgegebener Anteil der im Abgasstrom vorhandenen Schadstoffe vom Abgaskatalysator konvertiert wird,
**dadurch gekennzeichnet,**
**dass** in Abhängigkeit von dem Erreichen eines vorgegebenen Sauerstoffspeicherkapazitätswertes des Sauerstoffspeichers eine aktuelle Katalysatortemperatur erfasst wird, die mit einem auf denselben Sauerstoffspeicherkapazitätswert bezogenen Katalysatortemperatur-Vergleichswert verglichen wird,
**dass** anschließend im Falle einer gegenüber dem Katalysatortemperatur-Vergleichswert festgestellten höheren aktuellen Katalysatortemperatur ein Temperaturanstieg ermittelt wird, und
**dass** anschließend die Light-Off-Temperatur als zum Temperaturanstieg proportionale Größe, vorzugsweise linear proportionale Größe ermittelt wird.

2. Verfahren nach Anspruch 1, **dadurch gekennzeichnet, dass** der Katalysatortemperatur-Vergleichswert in einem Kennfeld einer Motorsteuereinrichtung abgelegt ist.

3. Verfahren nach Anspruch 1 oder 2, **dadurch gekennzeichnet, dass** der einem vorgegebenen Sauerstoffspeicherkapazitätswert zugeordnete Katalysatortemperatur-Vergleichswert auf einen neuen Katalysator bezogen ist.

4. Verfahren nach Anspruch 1 oder 2, **dadurch gekennzeichnet, dass** der einem vorgegebenen Sauerstoffspeicherkapazitätswert zugeordnete Katalysatortemperatur-Vergleichswert auf einen Alterungsgrad des Katalysators bezogen ist, der gegenüber dem aktuellen Katalysator-Alterungsgrad neuwertiger ist.

5. Verfahren nach einem der Ansprüche 1 bis 4, **dadurch gekennzeichnet, dass** der Sauerstoffspeicherkapazitätswert bei 40 bis 60 %, vorzugsweise bei 50 % der aktuellen Sauerstoffspeicherfähigkeit des Abgaskatalysators festgelegt wird.

6. Verfahren nach einem der Ansprüche 1 bis 5, **dadurch gekennzeichnet, dass** unterschiedliche Katalysator-Alterungsgrade, denen eine bestimmte Light-Off-Temperatur zugeordnet ist, in einem Kennfeld der Motorsteuereinrichtung abgelegt sind.

7. Verfahren nach einem der Ansprüche 1 bis 6, **dadurch gekennzeichnet, dass** die unterschiedlichen Alterungsgraden des Katalysators zugeordneten Werte der maximalen Sauerstoffspeicherfähigkeit des Sauerstoffspeichers in einem Kennfeld der Motorsteuereinrichtung abgelegt sind.

8. Verfahren nach einem der Ansprüche 1 bis 7, **dadurch gekennzeichnet, dass** die Katalysatortemperatur aktuell mittels einer Messeinrichtung erfasst oder anhand eines in der Motorsteuereinrichtung abgelegten Temperaturmodells ermittelt wird.

9. Verfahren nach einem der Ansprüche 1 bis 8, **dadurch gekennzeichnet, dass** die aktuelle in den Sauerstoffspeicher eingespeicherte Sauerstoffmenge anhand der von einer dem Katalysator vorgeschalteten und einer dem Katalysator nachgeschalteten Sonde, insbesondere einer Lambdasonde, erfassten Sondensignale ermittelt wird.

10. Verfahren nach einem der Ansprüche 1 bis 8, **dadurch gekennzeichnet, dass** die aktuelle in den Sauerstoffspeicher eingespeicherte Sauerstoffmenge anhand eines modellierten Vorkatsondensignals und eines gemessenen Sondensignals einer dem Katalysator nachgeschalteten Sonde, insbesondere einer Lambdasonde, ermittelt wird.

11. Verfahren nach einem der Ansprüche 1 bis 8, **dadurch gekennzeichnet, dass** die aktuelle in den Sauerstoffspeicher Saustoffmenge anhand eines Nachkatsondensignals ermittelt wird, das mittels einer dem Katalysator nachgeschalteten Lambdasonde erfasst wird, wobei während der Kaltstartphase eine Lambdaamplitude angelegt wird.

12. Motorsteuereinrichtung zur Durchführung eines der Verfahren nach den Ansprüchen 1 bis 11.

## Claims

1. Method of judging the quality of a catalytic converter arranged downstream of an internal combustion engine of a vehicle, in which the exhaust-gas stream originating from the internal combustion engine is directed through the catalytic converter in order to convert the pollutant components contained therein, the catalytic converter having an oxygen reservoir in which oxygen can be stored in the event of excess oxygen and from which oxygen can be taken in the event of an oxygen deficiency, and the catalytic converter having a specific light-off temperature at which a specific predetermined proportion of the pollutants present in the exhaust-gas stream are converted by the catalytic converter as a function of the degree of ageing, **characterised in that**, when a predetermined oxygen storage capacity value for the oxygen reservoir is reached, a current catalyst temperature is detected and compared with a catalyst temperature comparative value related to the same oxygen storage capacity value, that a temperature increase is then determined if the current catalyst temperature detected is higher than the catalyst temperature comparative value, and that the light-off temperature is then determined as a value proportional, preferably linearly proportional, to the temperature increase.

2. Method according to claim 1, **characterised in that** the catalyst temperature comparative value is stored in a characteristic map of an engine management system.

3. Method according to claim 1 or claim 2, **characterised in that** the catalyst temperature comparative value associated with a predetermined oxygen storage capacity value is related to a new catalyst.

4. Method according to claim 1 or claim 2, **characterised in that** the catalyst temperature comparative value associated with a predetermined oxygen storage capacity value is related to a degree of ageing of the catalyst which is a newer value than the current degree of ageing of the catalyst.

5. Method according to one of claims 1 to 4, **characterised in that** the oxygen storage capacity value is fixed at 40 to 60 %, preferably 50 %, of the current oxygen storage capacity of the catalytic converter.

6. Method according to one of claims 1 to 5, **characterised in that** different degrees of ageing of the catalyst with which a specific light-off temperature is associated are stored in a characteristic map of the engine management system.

7. Method according to one of claims 1 to 6, **characterised in that** the values of the maximum oxygen storage capacity for the oxygen reservoir associated with different degrees of ageing of the catalyst are stored in a characteristic map of the engine management system.

8. Method according to one of claims 1 to 7, **characterised in that** the current catalyst temperature is detected by means of a measuring device or the catalyst temperature is determined by way of a temperature model stored in the engine management system.

9. Method according to one of claims 1 to 8, **characterised in that** the current quantity of oxygen stored in the oxygen reservoir is determined by way of the probe signals detected by a probe arranged upstream of the catalyst and a probe arranged downstream of the catalyst, in particular a lambda probe.

10. Method according to one of claims 1 to 8, **characterised in that** the current quantity of oxygen stored in the oxygen reservoir is determined by way of a modelled primary catalyst probe signal and a measured probe signal from a probe arranged downstream of the catalyst, in particular a lambda probe.

11. Method according to one of claims 1 to 8, **characterised in that** the current quantity of oxygen in the oxygen reservoir is determined by way of a secondary catalyst probe signal detected by means of a lambda probe arranged downstream of the catalyst, a lambda amplitude being applied during the cold-start phase.

12. Engine management system for carrying out one of the methods according to claims 1 to 11.

## Revendications

1. Procédé d'évaluation de la qualité d'un convertisseur catalytique en aval d'un moteur à combustion interne d'un véhicule, dans lequel le flux de gaz d'échappement venant du moteur à combustion interne traverse le convertisseur catalytique pour convertir les composants de substances nocives contenus dedans, le convertisseur catalytique présentant un réservoir d'oxygène, dans lequel en cas d'excédent d'oxygène, de l'oxygène peut être emmagasiné et duquel en cas de manque d'oxygène, de l'oxygène peut être retiré, le convertisseur catalytique présentant en fonction du degré de vieillissement une certaine température d'amorçage (Light-Off) en tant que température de démarrage du catalyseur, à laquelle une certaine part prescrite des substances nocives présentes dans le flux de gaz d'échappement est convertie par le convertisseur catalytique, **caractérisé en ce qu'**une température de catalyseur actuelle est détectée en fonction de l'atteinte d'une valeur de capacité prescrite du réservoir d'oxygène, laquelle température est comparée à une valeur comparative de température de catalyseur par rapport à la même valeur de capacité du réservoir d'oxygène, **en ce qu'**ensuite dans le cas d'une température de catalyseur actuelle supérieure constatée par rapport à la valeur comparative de température de catalyseur, une augmentation de la température est déterminée, et **en ce qu'**ensuite la température d'amorçage (Light-Off) est déterminée comme grandeur proportionnelle à l'augmentation de la température, de préférence comme grandeur proportionnelle linéairement.

2. Procédé selon la revendication 1, **caractérisé en ce que** la valeur comparative de température de catalyseur est reportée dans un diagramme caractéristique d'un dispositif de commande du moteur.

3. Procédé selon la revendication 1 ou 2, **caractérisé en ce que** la valeur comparative de température de catalyseur associée à une valeur de capacité du réservoir d'oxygène prescrite concerne un nouveau catalyseur.

4. Procédé selon la revendication 1 ou 2, **caractérisé en ce que** la valeur comparative de température de catalyseur associée à une valeur de capacité du réservoir d'oxygène prescrite concerne un degré de vieillissement du catalyseur qui est à l'état neuf par rapport au degré de vieillissement du catalyseur actuel.

5. Procédé selon l'une quelconque des revendications 1 à 4, **caractérisé en ce que** la valeur de capacité du réservoir d'oxygène est déterminée entre 40 et 60 %, de préférence à 50 % de la capacité actuelle du réservoir d'oxygène du convertisseur catalytique.

6. Procédé selon l'une quelconque des revendications 1 à 5, **caractérisé en ce que** les différents degrés de vieillissement de catalyseur, auxquels est associée une certaine température d'amorçage (Light-Off), sont reportés dans un diagramme caractéristique du dispositif de commande du moteur.

7. Procédé selon l'une quelconque des revendications 1 à 6, **caractérisé en ce que** les valeurs associées aux différents degrés de vieillissement du catalyseur de la capacité maximale du réservoir d'oxygène sont reportés dans un diagramme caractéristique du dispositif de commande du moteur.

8. Procédé selon l'une quelconque des revendications 1 à 7, **caractérisé en ce que** la température du catalyseur est actuellement détectée au moyen d'un système de mesure ou est déterminée au moyen d'un modèle de température reporté dans le dispositif de commande du moteur.

9. Procédé selon l'une quelconque des revendications 1 à 8, **caractérisé en ce que** la quantité actuelle d'oxygène emmagasinée dans le réservoir d'oxygène est déterminée au moyen des signaux de sonde détectés par une sonde en amont du catalyseur et une sonde en aval du catalyseur, notamment une sonde lambda.

10. Procédé selon l'une quelconque des revendications 1 à 8, **caractérisé en ce que** la quantité actuelle d'oxygène emmagasinée dans le réservoir d'oxygène est déterminée au moyen d'un signal de sonde en amont du catalyseur modélisé et d'un signal de sonde mesuré d'une sonde en aval du catalyseur, notamment d'une sonde lambda.

11. Procédé selon l'une quelconque des revendications 1 à 8, **caractérisé en ce que** la quantité actuelle d'oxygène dans le réservoir d'oxygène est déterminée au moyen d'un signal de sonde en aval du catalyseur qui est détecté au moyen d'une sonde lambda en aval du catalyseur, une amplitude lambda étant reportée pendant la phase de démarrage à froid.

12. Dispositif de commande du moteur servant à réaliser l'un des procédés selon les revendications 1 à 11.
